# EUROPEAN PATENT SPECIFICATION

(11) **EP 2 215 905 B1**
(45) Date of publication and mention of the grant of the patent: **22.05.2013**
(21) Application number: 09152346.4
(22) Date of filing: 09.02.2009
(51) Int. Cl.: A01G 9/12

(54) **Tomato hook**
Tomatenhaken
Crochet pour tomates

(43) Date of publication of application: 11.08.2010
(73) Proprietor: 't Molentje B.V., 3992 CC Houten (NL)
(72) Inventor: Nieuwenhuijsen, Robertus Albertus Maria, 3992 CC Houten (NL)
(74) Representative: Voncken, Bartholomeus Maria Ch.

(56) References cited:
- FR-A- 2 779 906

## Description

The invention relates to a tomato hook comprising a central member for supporting a stock of string and two opposite end hooks for suspending the tomato hook from a support wire extending substantially horizontally, wherein each end hook is defined by a first leg attached to the central member and a second leg defining an acute angle with the first leg and connected thereto through a bend, wherein one leg of at least one end hook is provided with a curve of which a central part is located at a larger distance from the respective other leg than adjacent opposite side parts of said curve.

Such a tomato hook is known from FR-A-2.779.906 and is suspended from the support wire with one of its end hooks in a substantially vertical position and a first length of string is unwound from the central part to extend downwardly. A tomato plant will use the string to grow along upwards. When the tomato plant has reached a specific height, the tomato hook is moved sideways along the support wire while meanwhile unwinding an additional length of string. Manipulating the tomato hook in such a manner that it can be moved sideways along the support wire while meanwhile unwinding an additional length of string, however, is a time consuming and difficult job which requires a certain amount of skill.

The curve of this known tomato hook is provided in the second leg and may support a plate for dividing the string in said first length and a remaining length.

It is an object of the present invention to provide an improved tomato hook of the type referred to above.

Thus, in accordance with the present invention the tomato hook is **characterized in that** said one leg is the first leg of the end hook, that means the leg attached to the central part of the tomato hook.

When the tomato hook has to be moved sideways along the support wire it is rotated around the support wire to a more horizontal position in which the additional length of string can easily be unwound (or even falls) from the central part of the tomato hook. During said rotation of the tomato hook its operative end hook will slide relative to the support wire in such a manner that latter is received in the central part of the curve. The opposite side parts of the curve stabilise the position of the support wire in the curve, thus minimising the risk that the tomato hook fully slides off the support wire. In the position achieved the tomato hook can easily be moved sideways to a new location along the support wire where it is rotated back to its vertical position. This process may be repeated every time the tomato plant has again reached a sufficient height.

It is preferred that the curve is positioned between the bend and the location on said first leg closest to the outer end of the second leg. This allows to keep the dimensions of the entry opening for the support wire unchanged.

In many cases the tomato hook is of a type wherein the first and second leg adjacent to the bend define respective clamping points for clamping there between the support wire. According to the present invention it is preferred, then, that the curve in the respective leg begins substantially at the clamping point of said leg. This offers the advantage that a rotation of the tomato hook towards a more horizontal position almost instantly results in a shift from the support wire into the curve, and thus out of engagement with the clamping points of the two legs, resulting in the possibility of easily moving the tomato hook along the support wire to a new position.

Finally, it is preferred that both end hooks are provided with a curve. This makes the tomato hook versatile and its use independent from its relative position with respect to the support wire.

Hereinafter the invention will be elucidated while referring to the drawing in which:
Figure 1 shows a state of the art tomato hook;
Figure 2 shows part of an embodiment of the tomato hook not belonging to the invention in three different positions;
Figure 3 shows part of a second embodiment of the tomato hook not belonging to the invention, and
Figure 4 shows part of an embodiment of the tomato hook according to the invention.

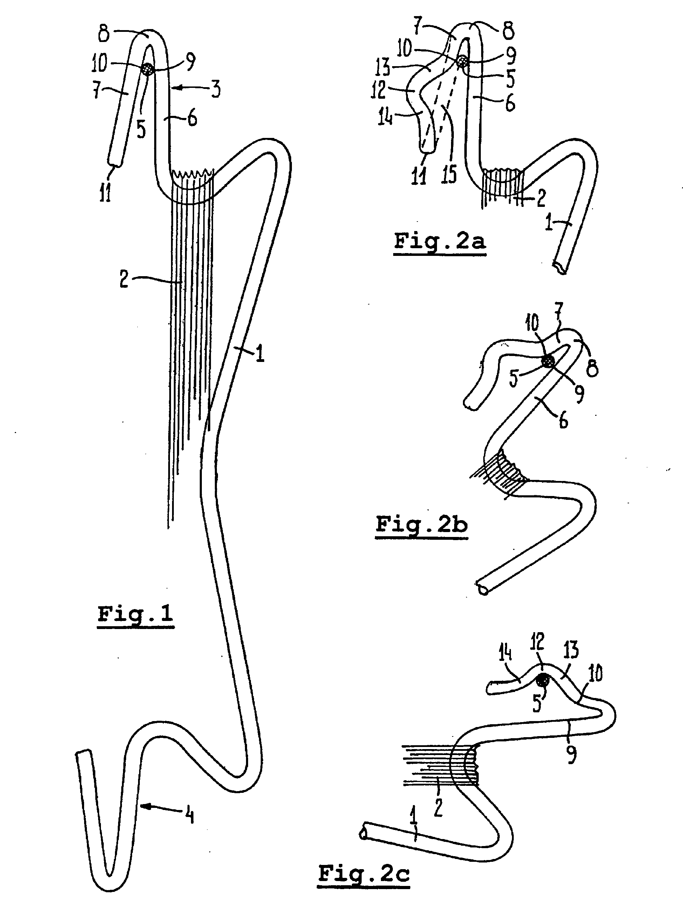

Firstly referring to figure 1, a state of the art tomato hook comprises a central member 1 for supporting a stock of string 2, and two opposite end hooks 3,4 for suspending the tomato hook from a support wire 5 extending substantially horizontally. Each end hook 3,4 is defined by a first leg 6 attached to the central member 1 and a second leg 7 defining an acute angle with the first leg and connected thereto through a bend 8. The two legs 6 and 7 define clamping points 9,10 between which, in the illustrated operative position of the tomato hook in which it is suspended substantially vertically from the support wire 5, the support wire 5 is clamped and a movement of the tomato hook lengthwise along the support wire is prevented (or at least hindered).

For moving the tomato hook along the support wire 5 while at the same time giving out (winding off) an additional length of string 2 the tomato hook is rotated clockwise (as seen in figure 1) around the support wire 5 towards a more horizontal position and the tomato hook is manipulated such that the support wire 5 slides along the second leg 7 away from the bend 8, thus eliminating the clamping action of the clamping points 9,10. Care has to be taken, however, that the support wire 5 does not accidentally slide past the outer free end 11 of the second leg 7, which makes the process time consuming and in need of certain skills.

Figure 2a shows an upper part (with end hook 3) of an embodiment of a tomato hook not belonging to the invention (the opposite, lower part with end hook 4 may be mirror imaged). The second leg 7 of said end hook 3 is provided with a curve of which a central part 12 is located at a larger distance from the first leg 6 than adjacent opposite side parts 13,14 of said curve.

As has been illustrated in figure 2a the outer side part 14 of the curve facing away from the bend 8 ends substantially on an imaginary line 15 defined by the longitudinal extension of a first part of said second leg 7 adjacent the bend 8 (and indicated by a dotted outline). Thus the dimension of the entrance opening between the outer free end 11 of the second leg 7 and the first leg 6 remains the same as with the state of the art tomato hook (dotted outline).

Further one can see that said outer side part 14 extends at an angle of less than 45 degrees with respect to said imaginary line 15. In an embodiment not illustrated said outer side part 14 even may end substantially in line with said imaginary line 15.

The curve in the second leg 7 begins with its inner side part 13 substantially at the clamping point 10 of said leg.

Figure 2b shows a position of the tomato hook after it has been rotated clockwise around support wire 5 to a more horizontal position. The support wire 5 still is clamped between clamping points 9,10 of the legs 6,7.

After a further rotation of the tomato hook the position according to figure 2c is reached in which the support wire 5 has moved out of contact with clamping points 9,10 and along second leg 7 into the central part 12 of the curve. This position is stabilised through the opposite side parts 13 and 14 of the curve. In this position the tomato hook may be moved lengthwise along the support wire 5 while giving out a length of string 2 from the central member 1. After reaching the desired position the tomato hook is rotated back to its vertical position and the support wire 5 again will engage the clamping points 9,10.

The tomato hook may be manipulated by a single hand without the risk of becoming disengaged from the support wire 5.

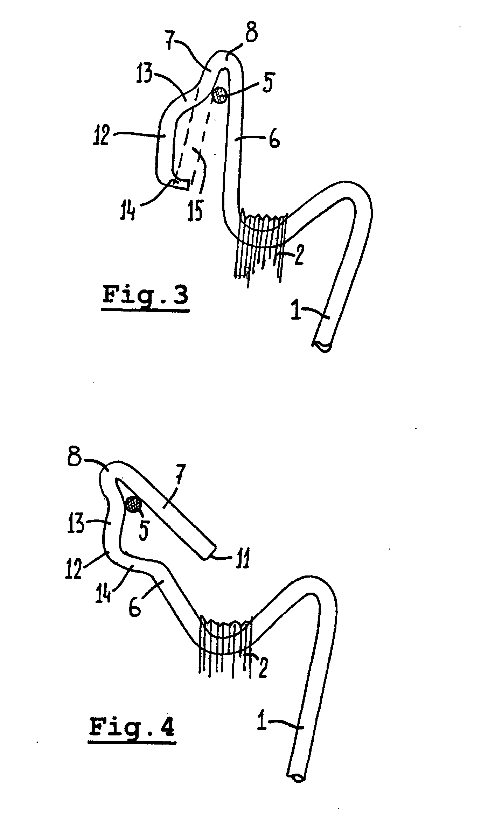

Figure 3 illustrates an alternative embodiment of the tomato hook not belonging to the invention in which said outer side part 14 extends substantially perpendicularly to said imaginary line 15.

Finally, figure 4 shows an embodiment of the tomato hook according to the invention, wherein the curve is provided in the first leg 6 of the end hook. The curve 12-14 is positioned between the bend 8 and the location on said first leg 6 closest to the outer end 11 of the second leg 7.

The invention is not limited to the embodiment described before which may be varied widely within the scope of the invention as defined by the appending claims.

## Claims

1. Tomato hook comprising a central member (1) for supporting a stock of string (2) and two opposite end hooks (3,4) for suspending the tomato hook from a support wire (5) extending substantially horizontally, wherein each end hook is defined by a first leg (6) attached to the central member and a second leg (7) defining an acute angle with the first leg and connected thereto through a bend (8), wherein one leg of at least one end hook is provided with a curve (12-14) of which a central part (12) is located at a larger distance from the respective other leg than adjacent opposite side parts (13,14) of said curve, **characterized in that** said one leg is the first leg (6) of the end hook (3,4).

2. Tomato hook according to claim 1, wherein the curve (12-14) is positioned between the bend (8) and the location on said first leg (6) closest to the outer end of the second leg (7).

3. Tomato hook according to any of the previous claims, wherein the first (6) and second leg (7) adjacent to the bend (8) define respective clamping points (9,10) for clamping there between the support wire (5), and wherein the curve in the respective leg begins substantially at the clamping point of said leg.

4. Tomato hook according to any of the previous claims, wherein both end hooks (3,4) are provided with a curve (12-14).

## Patentansprüche

1. Tomatenhaken, aufweisend einen zentralen Teil (1) zum Tragen eines Vorrats an Schnur/Faden (2) sowie zwei gegenüberliegende Endhaken (3, 4) zum Aufhängen des Tomatenhakens an einem Haltedraht (5), der sich im Wesentlichen horizontal erstreckt, wobei jeder Endhaken definiert ist durch einen ersten Schenkel (6), welcher an dem zentralen Teil befestigt ist, sowie einen zweiten Schenkel (7), welcher einen spitzen Winkel mit dem ersten Schenkel definiert und mit diesem über einen Biegeabschnitt (8) verbunden ist, wobei ein Schenkel von zumindest einem Endhaken mit einem Kurvenabschnitt (12-14) versehen ist, von dem ein zentraler Teil (12) mit einer größeren Distanz von dem jeweils anderen Schenkel angeordnet ist als benachbarte, gegenüberliegende Seitenteile (13, 14) von dem Kurvenabschnitt, **dadurch gekennzeichnet, dass** der eine Schenkel der erste Schenkel (6) von dem Endhaken (3, 4) ist.

2. Tomatenhaken gemäß Anspruch 1, wobei der Kurvenabschnitt (12-14) zwischen dem Biegeabschnitt (8) und derjenigen Stelle an dem ersten Schenkel (6) positioniert ist, welche dem äußeren Ende von dem zweiten Schenkel (7) am nächsten ist.

3. Tomatenhaken gemäß einem der vorangehenden Ansprüche, wobei der erste (6) und der zweite Schenkel (7) benachbart zu dem Biegeabschnitt (8) einen jeweiligen Klemmpunkt (9, 10) zum dazwischen Klemmen des Haltedrahts (5) definieren, und wobei der Kurvenabschnitt in dem jeweiligen Schenkel im Wesentlichen an dem Klemmpunkt von dem Schenkel beginnt.

4. Tomatenhaken gemäß einem der vorangehenden Ansprüche, wobei beide Endhaken (3, 4) mit einem Kurvenabschnitt (12-14) versehen sind.

## Revendications

1. Crochet à tomate comprenant un élément central (1) pour supporter un stock de ficelles (2) et deux crochets d'extrémité opposés (3, 4) pour suspendre ledit crochet à tomate sur un fil de support (5) s'étendant de façon sensiblement horizontale, pour lequel chaque crochet d'extrémité est défini par un premier segment (6) fixé à l'élément central et un second segment (7) définissant un angle aigu avec le premier segment et connecté à celui-ci par l'intermédiaire d'un coude (8), pour lequel un segment d'au moins un des crochets d'extrémité est pourvu d'une courbe (12-14) dont une partie centrale (12) est située à une distance plus importante par rapport à l'autre segment que les parties latérales opposées adjacentes (13, 14) de ladite courbe, **caractérisé en ce que** ledit segment est le premier segment (6) du crochet d'extrémité (3, 4).

2. Crochet à tomate selon la revendication 1, pour lequel la courbe (12-14) est positionnée entre le coude (8) et l'emplacement sur ledit premier segment (6) au plus près de l'extrémité extérieure du second segment (7).

3. Crochet à tomate selon l'une quelconque des revendications précédentes, pour lequel les premier (6) et second (7) segments adjacents au coude (8) définissent des points de serrage respectifs (9, 10) pour serrer entre ceux-ci le fil de support (5), et pour lequel la courbe dans le segment respectif commence sensiblement au point de serrage dudit segment.

4. Crochet à tomate selon une quelconque des revendications précédentes, dans lequel les deux crochets d'extrémité (3, 4) sont pourvus d'une courbe (12-14).
